# EUROPÄISCHE PATENTSCHRIFT

(11) **EP 2 696 794 B1**
(45) Veröffentlichungstag und Bekanntmachung des Hinweises auf die Patenterteilung: **13.03.2019**
(21) Anmeldenummer: 12720447.7
(22) Anmeldetag: 12.04.2012
(51) Int. Cl.: A61C 5/62

(54) **ABGABEBEHÄLTER FÜR DENTALMASSE**
DISPENSING CONTAINER FOR DENTAL COMPOUND
RÉCIPIENT DÉBITEUR POUR UN MATÉRIAU DENTAIRE

(30) Priorität: 15.04.2011 DE 102011017076
(43) Veröffentlichungstag der Anmeldung: 19.02.2014
(73) Patentinhaber: Transcodent GmbH & Co. KG, 24149 Kiel (DE)
(72) Erfinder: FRITZE, Joachim, 24211 Preetz (DE); SPREIZER, Heinrich, CH-8272 Ermatingen (CH)
(74) Vertreter: Manitz Finsterwald Patentanwälte PartmbB
(86) Internationale Anmeldenummer: PCT/EP2012/056714
(87) Internationale Veröffentlichungsnummer: WO 2012/140160

(56) Entgegenhaltungen:
- EP-A2- 0 639 510
- WO-A1-2005/075312
- US-A- 3 370 754
- US-A- 4 170 316

## Beschreibung

Die Erfindung betrifft einen Abgabebehälter, mit dem Dentalmasse aus einer Kammer heraus abgegeben werden kann. Der Abgabebehälter umfasst eine Kammer, eine Ausbringspitze und einen Kanal, der sich von der Kammer bis zum vorderen Ende der Ausbringspitze erstreckt. Die Ausbringspitze hat eine sich zu einem vorderen Ende hin verjüngende Mantelfläche. Es ist eine Kappe für die Ausbringspitze vorgesehen, die eine an die Mantelfläche der Ausbringspitze angepasste Innenfläche hat.

In der Kammer des Abgabebehälters ist die Dentalmasse enthalten, die der Zahnarzt bei der Zahnbehandlung verwendet. Wenn Druck auf die Dentalmasse in der Kammer ausgeübt wird, tritt die Dentalmasse durch den Kanal hindurch am vorderen Ende der Ausbringspitze aus und kann vom Zahnarzt verarbeitet werden.

Die in der Kammer enthaltene Dentalmasse wird nicht bei einer einzigen Behandlung aufgebraucht, sondern reicht für mehrfache Verwendung. Mit der Kappe wird der Abgabebehälter zwischen zwei Verwendungen verschlossen. Die Kappe wird dazu auf die Ausbringspitze aufgesteckt, so dass die Kanalöffnung der Kanal am vorderen Ende der Ausbringspitze verschlossen wird.

Beim Aufstecken der Kappe auf die Ausbringspitze kommt es in aller Regel zu einer Berührung zwischen der Ausbringspitze und der Innenfläche der Kappe. Die Ausbringspitze wird an der Innenfläche der Kappe entlang geführt, wodurch die Ausbringspitze in der Kappe zentriert wird. Diese zentrierende Wirkung kommt sowohl dann zur Geltung, wenn die Kappe manuell aufgesteckt wird, als auch dann, wenn die Kappe beim erstmaligen Verschließen des Abgabebehälters maschinell verschlossen wird.
Bei den bisherigen Abgabebehältern hat die Kappe eine Innenfläche, die so geformt ist, dass sie über den gesamten Umfang der Mantelfläche flächig auf der Ausbringspitze aufliegt. Wenn die konvexe Außenfläche der Ausbringspitze auf der konkaven Innenfläche der Kappe entlang geführt wird, können durch die Reibung Partikel von der Oberfläche abgeschabt werden. Beim weiteren Aufstecken werden die Partikel mit der Ausbringspitze nach vorne geführt und gelangen in den Bereich der Kanalöffnung. Es besteht die Gefahr, dass die Dentalmasse im Bereich der Kanalöffnung sich mit den Partikeln vermischt. Wenn beim Patienten Dentalmasse verwendet wird, die mit von der Kappe abgetragenen Partikeln verunreinigt ist, kann dies nachteilige Folgen haben.

Aus der WO 2005/075312 A1 und der EP 0 639 510 A2 sind Klebstoffbehälter bzw. Ausbringspitzen für Klebstoffe bekannt, welche mit einer Schraubkappe verschlossen werden können. Die Schraubkappe weist an ihrer Innenfläche Führungsstege auf, welche die Kappe beim Aufsetzen auf die Ausbringspitze zentrieren. Des weiteren ist eine Kappe für einen Behälter mit Ausbringspitze aus der US 4, 170, 316 bekannt. Der Erfindung liegt die Aufgabe zu Grunde, einen Abgabebehälter sowie eine für einen solchen Abgabebehälter bestimmte Kappe vorzustellen, bei denen das Risiko einer Verunreinigung der Dentalmasse vermindert ist. Ausgehend vom eingangs genannten Stand der Technik wird die Aufgabe gelöst mit den Merkmalen des unabhängigen Anspruchs 1. Erfindungsgemäß ist auf der Innenfläche der Kappe eine Mehrzahl von Führungsstegen ausgebildet. Vorteilhafte Ausführungsformen finden sich in den Unteransprüchen.

Zunächst werden einige Begriffe erläutert. Mit der Ausbringspitze wird ein Kanal definiert, in den die Dentalmasse aus der Kammer heraus eintreten kann. Am gegenüberliegenden Ende hat der Kanal eine Kanalöffnung, aus der die Dentalmasse austreten kann. Das Ende, an dem sich die Kanalöffnung befindet, wird als vorderes Ende der Ausbringspitze bezeichnet. Das Ende, an dem der Kanal in die Kammer übergeht, wird als hinteres Ende bezeichnet. Entsprechend werden die Begriffe vorne und hinten bei der Kappe verwendet.

Die sich verjüngende Mantelfläche der Ausbringspitze kann sich über die gesamte Länge der Ausbringspitze vom vorderen Ende bis zum hinteren Ende erstrecken. Möglich sind aber auch Ausführungsformen, bei denen nur ein zu dem vorderen Ende benachbarter Abschnitt der Ausbringspitze eine sich verjüngende Mantelfläche hat. Im sich daran anschließenden Abschnitt kann die Mantelfläche eine andere Form haben und beispielsweise zylindrisch sein. Die Innenfläche der Kappe kann so gestaltet sein, dass der Reibschluss zu der Mantelfläche nur in dem sich verjüngenden Abschnitt entsteht. Wenn der Reibschluss sich bei alternativen Ausführungsformen auch auf einen daran anschließenden zylindrischen Abschnitt erstreckt, kann dies den Halt der Kappe auf der Ausbringspitze verbessern.

Die Führungsstege auf der Innenfläche der Kappe bilden die Bereiche, mit denen die Kappe im geschlossenen Zustand auf der Außenfläche der Ausbringspitze aufliegt. Jeweils zwischen zwei Führungsstegen gibt es einen Freiraum, in dem kein Kontakt zwischen der Ausbringspitze und der Kappe besteht. Dies bezieht sich auf den Zustand, in dem die Kappe auf die Ausbringspitze aufgesteckt ist. Die Kappe kann von der Ausbringspitze abgezogen werden und liegt dann separat vor.

Wenn die Ausbringspitze sich zum vorderen Ende hin verjüngt, bedeutet dies, dass die Ausbringspitze am vorderen Ende einen geringeren Durchmesser hat als am hinteren Ende. Die Ausbringspitze läuft vorzugsweise konusförmig zu, wobei der Konuswinkel beispielsweise zwischen 2° und 8° liegen kann.

Durch die erfindungsgemäßen Führungsstege wird erreicht, dass beim Aufstecken der Kappe auf die Ausbringspitze der erste Kontakt zwischen der Mantelfläche der Ausbringspitze und einem Führungssteg der Kappe stattfindet. Beim weiteren Aufstecken der Kappe auf die Ausbringspitze wird die Ausbringspitze an dem Führungssteg entlang geführt. Durch die Reibung lösen sich unter Umständen Partikel von der Oberfläche des Führungsstegs oder von der Mantelfläche der Ausbringspitze. Diese Partikel werden beim weiteren Aufstecken der Kappe jedoch nicht in den Bereich der Kanalöffnung geführt, sondern werden zur Seite in die Freiräume zwischen den Führungsstegen verdrängt. Dort stören die Partikel aber nicht, weil sie sich nicht mit der Dentalmasse vermischen können. Das Risiko, dass die Dentalmasse durch Partikel verunreinigt wird, ist vermindert.

Aufgrund der Freiräume zwischen den Führungsstegen gibt es zwischen der Mantelfläche der Ausbringspitze und der Innenfläche der Kappe keinen dichtenden Abschluss. Ein dichtender Abschluss ist aber erwünscht, damit die Dentalmasse zwischen zwei Verwendungen vor Umgebungseinflüssen geschützt ist. Vorzugsweise wird der dichtende Abschluss über eine Frontfläche der Ausbringspitze hergestellt, die sich um die Kanalöffnung herum erstreckt. Wenn die Frontfläche rechtwinklig zur Achse der Ausbringspitze ausgerichtet ist, entsteht bei beliebiger Winkelausrichtung der aufgesteckten Kappe ein dichtender Abschluss der Kanalöffnung. Im Inneren der Kappe kann eine Stirnfläche vorgesehen sein, die an die Frontfläche der Ausbringspitze angepasst ist. Zur besseren Abdichtung der Kanalöffnung kann auf der Stirnfläche ein kegelförmiger Vorsprung ausgebildet sein, der sich in Richtung der Kanalöffnung erhebt.

Um der Ausbringspitze eine gute Führung zu bieten, sind vorzugsweise mindestens drei Führungsstege vorgesehen. Die Führungsstege können gleichverteilt über den Umfang der Kappe sein. Gegebenenfalls kann die Führung durch weitere Führungsstege verbessert werden. Beispielsweise können vier, fünf oder sechs Führungsstege vorgesehen sein. Die Führungsstege können eine Längsrichtung haben, die parallel zur Achse der Kappe ausgerichtet ist. Dies ist gleichbedeutend damit, dass die Führungsstege im aufgesteckten Zustand der Kappe parallel zur Achse der Ausbringspitze ausgerichtet sind. In Querrichtung haben die Führungsstege vorzugsweise eine konvexe Form. Wenn die konvexe Mantelfläche der Ausbringspitze entlang konvexer Führungsstege geführt wird, werden nur in geringem Umfang Partikel abgetragen. Das Risiko von Verunreinigungen der Dentalmasse wird dadurch weiter vermindert. Weiter vorzugsweise haben die Führungsstege in Querrichtung eine kontinuierliche Wölbung und sind frei von Kanten.

Je besser die Ausbringspitze beim Aufstecken der Kappe zentriert ist, desto weiter vorne findet der erste Kontakt zwischen der Ausbringspitze und der Innenfläche der Kappe statt. Damit eine sichere Führung der Ausbringspitze in der Kappe auch dann stattfindet, wenn diese schlecht zentriert ist, sollen die Führungsstege sich über eine große Länge in der Kappe erstrecken. Die Länge der Führungsstege ist vorzugsweise größer als 50 %, weiter vorzugsweise größer als 70 %, weiter vorzugsweise größer als 80 % der Länge der Ausbringspitze.

An ihrer Außenseite ist die Kappe vorzugsweise so gestaltet, dass die Kräfte zum Aufstecken und zum Abziehen der Kappe leicht übertragen werden können. Beim Aufstecken der Kappe muss in erster Linie eine Kraft in Axialrichtung aufgewendet werden. Die Kappe umfasst dazu vorzugsweise einen nach außen vorkragenden Vorsprung, der sich über den Umfang der Kappe erstreckt und der zum vorderen Ende der Kappe weist. Der Vorsprung kann in der vom vorderen Ende entfernten Hälfte der Kappe angeordnet sein.

Zum Abziehen der Kappe muss in erster Linie eine axiale Kraft in entgegengesetzter Richtung ausgeübt werden. Es kann dazu ein zum hinteren Ende der Kappe weisender Vorsprung vorgesehen sein. Dieser Vorsprung kann sich ebenfalls über den Umfang der Kappe erstrecken. Vorzugsweise ist der zum hinteren Ende weisende Vorsprung näher am hinteren Ende der Kappe als der zum vorderen Ende weisende Vorsprung.

Beim Abziehen sitzt die Kappe gelegentlich so fest, dass sie nicht ohne weiteres in Axialrichtung abgezogen werden kann. Das Lösen der Kappe kann erleichtert werden, indem die Kappe zusätzlich relativ zur Ausbringspitze gedreht wird. Es können dazu Rippen an der Außenseite der Kappe vorgesehen sein, die sich in Längsrichtung erstrecken. Über die Rippen kann ein Drehmoment auf die Kappe ausgeübt werden. Um die Kraftübertragung zu verbessern, können die Rippen eine oder mehrere Kanten aufweisen.

Vorteilhaft ist es, wenn die Bedienperson zwischen dem Ausüben eines Drehmoments und dem Ausüben einer Kraft in Axialrichtung wechseln kann, ohne die Position der Finger zu ändern. Die Rippen sind in einer vorteilhaften Ausführungsform deswegen so angeordnet, dass sie sich von dem nach hinten weisenden Vorsprung in Richtung des hinteren Endes der Kappe erstrecken. Es können beispielsweise 16 bis 20 solcher Rippen vorgesehen sein.

Zusätzlich oder alternativ dazu können auch Rippen vorgesehen sein, die sich von dem nach vorne weisenden Vorsprung in Richtung des vorderen Endes der Kappe erstrecken. Diese Rippen können zusätzlichen Halt verleihen, wenn die Bedienperson beim Aufstecken der Kappe in diesem Bereich angreift. Die Rippen und Vorsprünge sind insbesondere dann hilfreich, wenn die Bedienperson Handschuhe trägt.

Der Abgabebehälter dient zur Abgabe der geringen Mengen von Dentalmasse, die bei der Zahnbehandlung Verwendung finden. Entsprechend sind die Abmessungen des Abgabebehälters und der Ausbringspitze. Die Kammer des Abgabebehälters hat vorzugsweise eine Länge zwischen 10 mm und 30 mm. Der Durchmesser der Kammer kann beispielsweise zwischen 4 mm und 10 mm liegen. Die Länge der Kappe zwischen dem vorderen Ende und dem hinteren Ende liegt vorzugsweise zwischen 5 mm und 10 mm. Der größte Durchmesser quer dazu liegt vorzugsweise zwischen 4 mm und 8 mm. Die Länge der Ausbringspitze entspricht vorzugsweise der Länge der Kappe.

Die Erfindung wird nachfolgend unter Bezugnahme auf die beigefügten Zeichnungen anhand vorteilhafter Ausführungsformen beispielhaft beschrieben. Es zeigen:
- Fig. 1 :: einen erfindungsgemäßen Abgabebehälter ohne Kappe;
- Fig. 2:: den Abgabebehälter aus Fig. 1 mit Kappe;
- Fig. 3:: eine Seitenansicht einer erfindungsgemäßen Kappe;
- Fig. 4:: eine Ansicht von hinten auf die Kappe aus Fig. 3;
- Fig. 5:: eine andere Ausführungsform einer erfindungsgemäßen Kappe in perspektivischer Ansicht; und
- Fig. 6:: die Kappe aus Fig. 5 in einer anderen Perspektive.

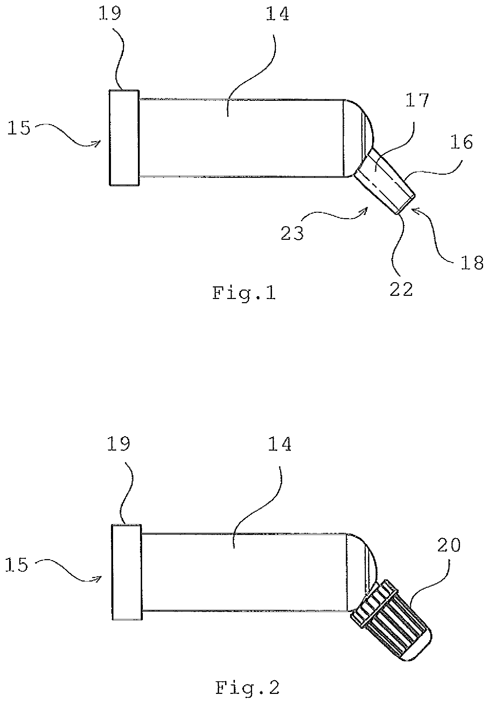

Ein in Fig. 1 gezeigter Abgabebehälter hat ein zylinderförmiges Gehäuse 14, das eine zylinderförmige Kammer 15 umschließt. Die Kammer 15 ist mit einer Dentalmasse gefüllt. Die Dentalmasse kann beispielsweise eine Substanz sein, die zum Füllen von Kavitäten in Zähnen dient und die nach dem Einbringen in die Kavität durch UV-Strahlung ausgehärtet wird.

An das vordere Ende des Gehäuses 14 schließt sich eine Ausbringspitze 16 an. Im Inneren der Ausbringspitze 16 ist ein in Fig. 1 gestrichelt angedeuteter Kanal 17 ausgebildet, der sich von der Kammer 15 bis zur einer Kanalöffnung 18 am vorderen Ende der Ausbringspitze 16 erstreckt. Die Ausbringspitze 16 hat eine konusförmige Mantelfläche 23, die sich zum vorderen Ende hin verjüngt. Der Konuswinkel α der Mantelfläche 23 beträgt etwa 4°.

An ihrem hinteren Ende wird die Kammer 15 mit einem in Fig. 1 nicht sichtbaren Kolben abgeschlossen, der gleitend in der Kammer 15 aufgenommen ist. Der Kolben schließt rundum mit der Innenwand der Kammer ab, so dass die in der Kammer enthaltene Dentalmasse von der Umgebung isoliert ist.

Zur Verwendung wird der erfindungsgemäße Abgabebehälter über einen Flansch 19 mit einem in den Figuren nicht dargestellten Werkzeug verbunden. Das Werkzeug ist so gestaltet, dass bei Betätigung ein Stößel am vorderen Ende des Werkzeugs austritt und den Kolben des Abgabebehälters in die Kammer 15 hinein drückt. Unter dem Druck des Kolbens bewegt sich die Dentalmasse durch den Kanal 17 zur Kanalöffnung 18 und tritt dort aus dem Abgabebehälter aus. Die Dentalmasse ist bereit zur weiteren Verwendung durch den Zahnarzt.

Die Kammer 15 hat eine Länge von ungefähr 20 mm und einen Durchmesser von ungefähr 5 mm. Die in der Kammer enthaltene Menge an Dentalmasse wird nicht bei einer einzigen Verwendung aufgebraucht, sondern reicht für mehrere Verwendungen.

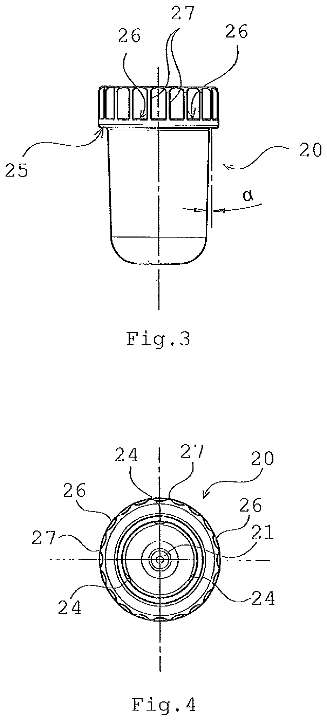

Im Auslieferungszustand sowie zwischen zwei Verwendungen ist die Kanalöffnung 18 des Kanals 17 mit einer Kappe 20 verschlossen, die auf die Ausbringspitze 16 aufgesteckt ist. Die Kappe 20 hat eine in Fig. 4 dargestellte innere Stirnfläche 21. Die innere Stirnfläche 21 schließt ab mit der Frontfläche 22 der Ausbringspitze 16, die sich um die Kanalöffnung 18 herum erstreckt. Die im Bereich der Kanalöffnung 18 befindliche Dentalmasse ist dadurch von der Umgebung isoliert.

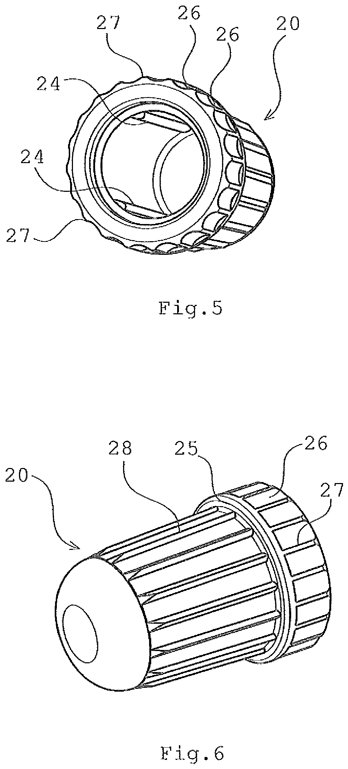

Auf der Innenfläche der Kappe 20 sind drei in den Figuren 4 und 5 gezeigte Führungsstege 24 ausgebildet, die sich in Längsrichtung der Kappe 20 erstrecken. Die Führungsstege 24 sind an die konusförmige Mantelfläche 23 der Ausbringspitze 16 angepasst, d.h. die Führungsstege 24 verjüngen sich zum vorderen Ende der Kappe 20 hin unter einem Winkel von etwa 4°. In Querrichtung erheben sich die Führungsstege 24 von der Innenfläche der Kappe 20 in einer kontinuierlich gewölbten Form, die frei von Kanten ist. Die Führungsstege erheben sich um etwa 0,1 mm bis 0,5 mm gegenüber der Innenfläche.

Im aufgesteckten Zustand besteht ein Reibschluss zwischen den Führungsstegen 24 der Kappe 20 und der Mantelfläche 23 der Ausbringspitze 16, durch den die Kappe 20 auf der Ausbringspitze 16 gehalten wird.

Die Kappe 20 hat auf ihrer Mantelfläche einen zum vorderen Ende weisenden Vorsprung 25, der nahe dem hinteren Ende der Kappe 20 angeordnet ist. Der Vorsprung 25 bietet den Fingern der Bedienperson Widerstand, wenn die Kappe 20 aufgesteckt wird. Die Kappe 20 hat außerdem einen nach hinten weisenden Vorsprung 26, der von Rippen 27 unterbrochen ist. An dem Vorsprung 26 finden die Finger der Bedienperson beim Abziehen der Kappe 20 Widerstand. Über die Rippen 27, von denen zwanzig über den Umfang der Kappe verteilt sind, kann die Kappe 20 parallel etwas gedreht werden, um das Abziehen zu erleichtern. Die Kappe gemäß den Figuren 5 und 6 hat zusätzlich Rippen 28 zwischen dem nach vorne weisenden Vorsprung 25 und dem vorderen Ende der Kappe 20. Die Rippen 28 verbessern die Handhabung beim Aufstecken der Kappe 20.

Wenn die Kappe 20 auf die Ausbringspitze 16 aufgesteckt wird, findet der erste Kontakt zwischen der Ausbringspitze 16 und der Kappe 20 an einem der Führungsstege 24 statt. Da beide aufeinander treffenden Flächen eine konvexe Form haben, werden nur in geringem Umfang Partikel von der Oberfläche abgerieben. Beim weiteren Aufstecken der Kappe 20 werden die Partikel zur Seite hin in die Freiräume zwischen den Führungsstegen 24 verdrängt, so dass die im Bereich der Kanalöffnung 18 befindliche Dentalmasse nicht durch Partikel verunreinigt wird.

## Patentansprüche

1. Abgabebehälter für eine Dentalmasse mit einer Kammer (15), mit einer Ausbringspitze (16) und mit einem Kanal (17), der sich von der Kammer (15) bis zu einer am vorderen Ende der Ausbringspitze (16) angeordneten Kanalöffnung (18) erstreckt, wobei die Ausbringspitze (16) eine sich zum vorderen Ende hin verjüngende Mantelfläche (23) aufweist und wobei eine durch Ausübung einer Kraft in Axialrichtung auf die Ausbringspitze (16) aufsteck- bzw. abziehbare Kappe (20) vorgesehen ist, die eine an die Mantelfläche (23) der Ausbringspitze (16) angepasste Innenfläche hat, wobei die Innenfläche der Kappe (20) eine Mehrzahl von Führungsstegen (24) aufweist und im aufgesteckten Zustand ein Reibschluss zwischen den Führungsstegen (24) der Kappe (20) und der Mantelfläche (23) der Ausbringspitze (16) besteht, durch den die Kappe (20) auf der Ausbringspitze (16) gehalten wird,
**dadurch gekennzeichnet,**
**dass** die Führungsstege (24) in Querrichtung eine konvexe Form aufweisen, so dass beim Aufstecken der Kappe auf die Ausbringspitze, die auf die Ausbringspitze treffenden Flächen der Führungsstege eine konvexe Form haben.

2. Abgabebehälter nach Anspruch 1, **dadurch gekennzeichnet, dass** die Ausbringspitze (16) eine sich um die Kanalöffnung (18) herum erstreckende Frontfläche (22) aufweist, die rechtwinklig zur Achse der Ausbringspitze (16) ausgerichtet ist.

3. Abgabebehälter nach Anspruch 2, **dadurch gekennzeichnet, dass** die Kappe (20) eine an die Frontfläche (22) der Abgabespitze angepasste innere Stirnfläche (21) aufweist.

4. Abgabebehälter nach einem der Ansprüche 1 bis 3, **dadurch gekennzeichnet, dass** die Führungsstege (24) eine zur Achse der Kappe (20) parallele Längsrichtung haben.

5. Abgabebehälter nach einem der Ansprüche 1 bis 4, **dadurch gekennzeichnet, dass** die Führungsstege (24) in Querrichtung eine kontinuierlich gewölbte Form haben.

6. Abgabebehälter nach einem der Ansprüche 1 bis 5, **dadurch gekennzeichnet, dass** die Führungsstege (24) sich über mindestens 50 %, vorzugsweise mindestens 70 %, weiter vorzugsweise mindestens 80 % der Länge der Ausbringspitze (16) erstrecken.

7. Abgabebehälter nach einem der Ansprüche 1 bis 6, **dadurch gekennzeichnet, dass** die Kappe (20) auf ihrer Mantelfläche einen zum vorderen Ende weisenden umlaufenden Vorsprung (25) aufweist.

8. Abgabebehälter nach einem der Ansprüche 1 bis 7, **dadurch gekennzeichnet, dass** die Kappe (20) auf ihrer Mantelfläche einen zum hinteren Ende weisenden umlaufenden Vorsprung (26) aufweist.

9. Abgabebehälter nach Anspruch 8, **dadurch gekennzeichnet, dass** die Kappe auf ihrer Mantelfläche eine Mehrzahl von Rippen (27) aufweist, die sich von dem nach hinten weisenden Vorsprung (26) in Richtung des hinteren Endes der Kappe (20) erstrecken.

## Claims

1. A dispensing container for a dental compound having a chamber (15), having a dispensing tip (16), and having a passage (17) which extends from the chamber (15) up to a passage opening (18) arranged at a front end of the dispensing tip (16), wherein the dispensing tip (16) has a jacket surface (23) which tapers toward the front end, and wherein a cap (20) is provided which can be plugged onto or pulled off the dispensing tip (16) by exertion of a force in an axial direction and which has an inner surface adapted to the jacket surface (23) of the dispensing tip (16), with the inner surface of the cap (20) having a plurality of guide webs (24) and a friction lock being present between the guide webs (24) of the cap (20) and the jacket surface (23) of the dispensing tip (16) in a plugged-on state, the cap (20) being held on the dispensing tip (16) by said friction lock,
**characterized in that**
the guide webs (24) have a convex shape in a transverse direction such that, on the plugging of the cap onto the dispensing tip, the surfaces of the guide webs which impact the dispensing tip have a convex shape.

2. A dispensing container in accordance with claim 1, **characterized in that** the dispensing tip (16) has a front surface (22) which extends around the passage opening (18) and which is aligned at a right angle to an axis of the dispensing tip (16).

3. A dispensing container in accordance with claim 2, **characterized in that** the cap (20) has an inner end face (21) adapted to the front surface (22) of the dispensing tip.

4. A dispensing container in accordance with any one of the claims 1 to 3, **characterized in that** the guide webs (24) have a longitudinal direction in parallel with an axis of the cap (20).

5. A dispensing container in accordance with any one of the claims 1 to 4, **characterized in that** the guide webs (24) have a continuously arched shape in the transverse direction.

6. A dispensing container in accordance with any one of the claims 1 to 5, **characterized in that** the guide webs (24) extend over at least 50%, preferably at least 70%, further preferably at least 80%, of the length of the dispensing tip (16).

7. A dispensing container in accordance with any one of the claims 1 to 6, **characterized in that** the cap (20) has a peripheral projection (25) facing toward the front end at its jacket surface.

8. A dispensing container in accordance with any one of the claims 1 to 7, **characterized in that** the cap (20) has a peripheral projection (26) facing toward a rear end at its jacket surface.

9. A dispensing container in accordance with claim 8, **characterized in that** the cap has a plurality of ribs (27) at its jacket surface which extend in the direction of the rear end of the cap (20) from the projection (26) facing to the rear.

## Revendications

1. Récipient de distribution d'une pâte dentaire, comportant une chambre (15), une pointe d'expulsion (16) et un canal (17) qui s'étend depuis la chambre (15) jusqu'à une ouverture de canal (18) ménagée à l'extrémité avant de la pointe d'expulsion (16),
dans lequel
la pointe d'expulsion (16) présente une surface enveloppe (23) qui va en se rétrécissant vers l'extrémité avant, et
il est prévu un capuchon (20) enfichable ou détachable par application d'une force en direction axiale sur la pointe d'expulsion (16) et présentant une surface intérieure adaptée à la surface enveloppe (23) de la pointe d'expulsion (16),
la surface intérieure du capuchon (20) comprend une pluralité de barrettes de guidage (24), et
dans l'état enfiché, il existe une coopération par friction entre les barrettes de guidage (24) du capuchon (20) et la surface enveloppe (23) de la pointe d'expulsion (16), moyennant quoi le capuchon (20) est retenu sur la pointe d'expulsion (16),
**caractérisé en ce que**
les barrettes de guidage (24) présentent une forme convexe en direction transversale, de sorte que lors de l'enfichage du capuchon sur la pointe d'expulsion, les surfaces des barrettes de guidage qui tombent sur la pointe d'expulsion présentent une forme convexe.

2. Récipient de distribution selon la revendication 1,
**caractérisé en ce que**
la pointe d'expulsion (16) présente une surface frontale (22) qui s'étend autour de l'ouverture de canal (18) et qui est orientée à angle droite par rapport à l'axe de la pointe d'expulsion (16).

3. Récipient de distribution selon la revendication 2,
**caractérisé en ce que**
le capuchon (20) présente une surface frontale intérieure (21) adaptée à la surface frontale (22) de la pointe de d'expulsion.

4. Récipient de distribution selon l'une des revendications 1 à 3,
**caractérisé en ce que**
les barrettes de guidage (24) ont une direction longitudinale parallèle à l'axe du capuchon (20).

5. Récipient de distribution selon l'une des revendications 1 à 4,
**caractérisé en ce que**
les barrettes de guidage (24) ont une forme bombée en continu, en direction transversale.

6. Récipient de distribution selon l'une des revendications 1 à 5,
**caractérisé en ce que**
les barrettes de guidage (24) s'étendent sur au moins 50 %, de préférence sur au moins 70 %, de préférence particulière sur au moins 80 % de la longueur de la pointe d'expulsion (16).

7. Récipient de distribution selon l'une des revendications 1 à 6,
**caractérisé en ce que**
sur sa surface enveloppe, le capuchon (20) présente une saillie périphérique (25) dirigée vers l'extrémité avant.

8. Récipient de distribution selon l'une des revendications 1 à 7,
**caractérisé en ce que**
sur sa surface enveloppe, le capuchon (20) présente une saillie périphérique (26) dirigée vers l'extrémité arrière.

9. Récipient de distribution selon la revendication 8,
**caractérisé en ce que**
sur sa surface enveloppe, le capuchon présente une pluralité de nervures (27) qui s'étendent depuis la saillie (26) dirigée vers l'arrière en direction de l'extrémité arrière du capuchon (20).
